# EUROPÄISCHE PATENTSCHRIFT

(11) **EP 0 555 742 B1**
(45) Veröffentlichungstag und Bekanntmachung des Hinweises auf die Patenterteilung: **06.05.1998**
(21) Anmeldenummer: 93101611.7
(22) Anmeldetag: 03.02.1993
(51) Int. Cl.: C08G 18/12, C08G 18/48, C08G 18/76

(54) **Verfahren zur Herstellung von Fluorchlorkohlenwasserstoff freien Polyurethan-Weichschaumstoffen unter Verwendung von Urethangruppen enthaltenden Polyisocyanatmischungen auf Diphenylmethan-diisocyanatbasis sowie derartige modifizierte Polyisocyanatmischungen**
Process for the preparation of fluorchlorhydrocarbon-free flexible polyurethane foams using urethane groups containing polyisocyanate blends based on diphenylmethane-diisocyanate as well as likewise modified polyisocyanate blends
Procédé pour la préparation de mousses flexibles de polyuréthane sans hydrocarbures de fluorochlore à partir de mélanges de polyisocyanates à partir de diphénylméthane-diisocyanate contenant des groupes uréthanes ainsi que les mélanges de polyisocyanates ainsi modifiés

(30) Priorität: 11.02.1992 DE 4203918
(43) Veröffentlichungstag der Anmeldung: 18.08.1993
(73) Patentinhaber: BASF Aktiengesellschaft, 67063 Ludwigshafen (DE)
(72) Erfinder: Lutter, Heinz-Dieter, Dr., W-6903 Neckargemuend (DE); Bruchmann, Bernd, Dr., W-6700 Ludwigshafen (DE); Spang, Claudia, W-6710 Frankenthal (DE); Minges, Roland, Dr., W-6718 Gruenstadt (DE); Scherzer, Dietrich, Dr., W-6730 Neustadt (DE); Lugmayr, Michael, W-8038 Groebenzell (DE); Zschiesche, Ruth, Dr., W-6800 Mannheim 24 (DE)

(56) Entgegenhaltungen:
- EP-A- 0 022 617
- EP-A- 0 111 121
- EP-A- 0 344 551
- GB-A- 2 109 803

## Beschreibung

Gegenstand der Erfindung sind ein Verfahren zur Herstellung von Fluorchlorkohlenwasserstoff (FCKW) freien Polyurethan(PU)-Weichschaumstoffen oder weichelastischen PU-Formschaumstoffen aus an sich bekannten Ausgangsstoffen, jedoch unter Verwendung spezieller mit Urethangruppen modifizierten Polyisocyanatmischungen auf Diphenylmethan-diisocyanat(MDI)-basis mit einem Gehalt an NCO-Gruppen von 20 bis 30 Gew.-%, die ihrerseits hergestellt werden durch Umsetzung einer Mischung aus Diphenylmethan-diisocyanaten und Polyphenyl-polymethylen-polyisocyanaten (Roh-MDI) mit einer Polyether-polyolmischung mit einer Hydroxylzahl von 120 bis 25 aus mindestens einem Polyoxypropylen-glykol und mindestens einem trifunktionellen Polyoxypropylen-polyoxyethylen-polyol mit einem Gehalt an polymerisierten Ethylenoxideinheiten von 10 bis 90 Gew.-% oder durch Umsetzung von 4,4'-MDI oder einer MDI-Isomerenmischung mit der genannten Polyether-polyolmischung zu einem NCO-Gruppen haltigen Quasiprepolymeren und Verdünnung dieses Quasiprepolymeren mit Roh-MDI und derartige flüssige, Urethangruppen gebunden enthaltende Polyisocyanatmischungen.

Die Herstellung von PU-Weich- oder weichelastischen PU-Formschaumstoffen durch Umsetzung von höhermolekularen Polyhydroxylverbindungen, vorzugsweise von Polyester- oder Polyether-polyolen, und gegebenenfalls Kettenverlängerungs- und/ oder Vernetzungsmitteln mit organischen oder/und modifizierten organischen Polyisocyanaten ist bekannt und wird in zahlreichen Patent- und Literaturveröffentlichungen beschrieben.

Beispielhaft genannt seien das Kunststoff-Handbuch, Band VII, Polyurethane, Carl Hanser Verlag, München, 1. Auflage, 1966, herausgegeben von Dr. R. Vieweg und Dr. A Höchtlen, und 2. Auflage, 1983, herausgegeben von Dr. G. Oertel.

Durch geeignete Wahl der Aufbaukomponenten und ihrer Mengenverhältnisse können PU-Weichschaumstoffe mit sehr guten mechanischen Eigenschaften, insbesondere mit einer hohen Reißfestigkeit und hohen Stauchhärte, erhalten werden.

Nach Angaben der DE-C-1520737 (US-A-3 336 242) können PU-Schaumstoffe mit offener Zellstruktur hergestellt werden nach einem einstufigen Verfahren durch Umsetzung von Polyisocyanaten mit Polyoxypropylen-polyoxyethylen-triolen mit Molekulargewichten von 3000 bis 8000, die als Endblock 3 bis 5 Gew.-% Ethylenoxid und als Startermolekül Glycerin gebunden enthalten.

Sehr weiche PU-Schaumstoffe erhält man nach GB-A-1 079 105 aus einem Polyether-polyol oder einer -mischung mit einer Hydroxylzahl von 70 bis 170, die enthält ein trifunktionelles Polyoxyalkylen-polyol, wie z.B. oxpropyliertes Glycerin und bis zu 40 Gew.-% eines Polyoxyalkylen-glykols, z.B. oxpropyliertes Ethylenglykol, und einem organischen Polyisocyanat, bevorzugt Toluylen-diisocyanat (TDI), in Gegenwart von Wasser und einem Fluorchlorkohlenwasserstoff, vorzugsweise Trichlorfluormethan, als Treibmittel.

Flexible PU-Schaumstoffe werden ferner in der GB-A-1 064 576 beschrieben. Nach Angaben dieser Patentschrift werden organische Diisocyanate, vorzugsweise TDI, mit einer Mischung aus 50 bis 90 Gew.-% eines Polyoxyalkylen-triols mit einer Hydroxylzahl von 30 bis 170 und 10 bis 50 Gew.-% eines Polyoxyalkylen-diols mit einer Hydroxylzahl von 40 bis 110, wobei die Mischung einen Gehalt an primären Hydroxylgruppen von 10 bis 65 % besitzt, in Gegenwart von Wasser zur Reaktion gebracht.

Bekannt ist auch die Herstellung von bei Raumtemperatur flüssigen Diphenylmethan-diisocyanat-Zusammensetzungen.

Nach Angaben der DE-C-16 18 380 (US-A-3 644 457) werden hierzu ein Mol 4,4'- und/oder 2,4'-MDI mit 0,1 bis 0,3 Mol Tri-1,2-oxypropylen-glykol und/oder Poly-1,2-oxypropylenglykol mit einem Molekulargewicht bis 700 zur Reaktion gebracht.

Gemäß GB-A-1 369 334 wird die Modifizierung in zwei Reaktionsstufen durchgeführt und als Modifizierungsmittel Dipropylen-glykol oder Polyoxypropylen-glykol mit einem Molekulargewicht unter 2000 verwendet.

Die DE-A-29 13 126 (US-A-4 229 347) beschreibt MDI-Zusammensetzungen, in denen 10 bis 35 Gew.-% der Isocyanatgruppen mit einem Gemisch aus mindestens 3 Alkylenglykolen umgesetzt werden und wobei eines dieser Glykole Di-, Tri- oder ein höhermolekulares Polypropylen-glykol ist.

In der DE-A-24 04 166 (GB-A-1 430 455) werden hingegen als Modifizierungsmittel Gemische aus einem Polyoxyethylen-glykol oder Polyoxyethylen-glykolgemisch mit einem durchschnittlichen Molekulargewicht kleiner als 650 und mindestens einem Alkylenglykol mit mindestens 3 C-Atomen genannt.

Die DE-A-23 46 996 (GB-A-1 377 679) betrifft MDI-Zusammensetzungen, bei denen 10 bis 35 Gew.-% der Isocyanatgruppen mit einem handelsüblichen Polyoxyethylen-glykol umgesetzt wurden.

Zur Herstellung von flüssigen Polyisocyanat-Zusammensetzungen wurde neben MDI und Glykolen und/oder Polyoxyalkylenglykolen zusätzlich auch die Mitverwendung von Roh-MDI beschrieben.

Nach der EP-A-10 850 besteht eine derartige Polyisocyanat-Zusammensetzung aus einem mit Polyoxyalkylen-polyolen mit einer Funktionalität von 2 bis 3 auf Basis von Polyoxypropylen-polyol und gegebenenfalls Polyoxyethylen-polyol mit Molekulargewichten von 750 bis 3000 modifiziertem MDI im Gemisch mit Roh-MDI.

Eine flüssige Roh-MDI-Zusammensetzung wird nach der DE-B-27 37 338 (US-A-4 055 548) durch Vereinigen von Roh-MDI mit einem Polyoxyethylen-glykol mit einem durchschnittlichen Molekulargewicht von 200 bis 600 erhalten.

Nach Angaben der DE-B 26 24 526 (GB-A-1 550 325) wird ein nach einem speziellen Verfahren hergestelltes Roh-MDI mit 88 bis 95 Gew.-% MDI mit Polyoxypropylen-glykol des Molekulargewichtsbereichs 134 bis 700 umgesetzt.

Die DE-A-25 13 796 (GB-A-1 444 192) und DE-A-25 13 793 (GB-A-1 450 660) betreffen Roh-MDI-Zusammensetzungen, bei denen das Roh-MDI mit Alkylen- oder Polyoxyalkylen-glykolen in bestimmten Mengen modifiziert wurde.

Die genannten Alkylen- oder Polyoxyalkylen-glykole bewirken zwar eine Verflüssigung der bei 42°C bzw. 28°C schmelzenden 4,4'- bzw. 2,4'-MDI-Isomeren. Nachteilig ist jedoch, daß die Polyisocyanat-Zusammensetzungen bei Temperaturen um 10°C nach längeren Lagerzeiten kristalline Ausscheidungen zeigen.

Es ist ferner bekannt, PU-Weichschaumstoffe unter Verwendung von mit Urethangruppen modifizierten Roh-MDI-Zusammensetzungen als Polyisocyanatkomponente herzustellen.

Nach Angaben der EP-A-22 617 wird hierbei ein di- bis trifunktionelles Polyoxypropylen-polyoxyethylen-polyol mit einem Gehalt an polymerisierten Oxyethylengruppen von mindestens 50 Gew.-% mit einer Mischung aus MDI-Isomeren zur Reaktion gebracht und das erhaltene Quasiprepolymer danach mit Roh-MDI verdünnt. Nachteilig an den beschriebenen PU-Schaumstoffen ist insbesondere die geringe Zug- und Weiterreißfestigkeit.

Mit Urethangruppen modifizierte Polyisocyanatmischungen auf Basis von Roh-MDI mit einem Gehalt an NCO-Gruppen von 12 bis 30 Gew.-% werden auch in der EP-B-0 111 121 (US-A-4 478 960) beschrieben. Zur Modifizierung des MDI oder Roh-MDI wird ein Polyoxypropylen-polyoxyethylen-polyol mit einer Funktionalität von 2 bis 4, einer Hydroxylzahl von 10 bis 65 und einem Gehalt an polymerisierten Ethylenoxideinheiten von 5 bis 30 Gew.-% eingesetzt. Unter Verwendung dieser mit Urethangruppen modifizierten Polyisocyanatmischungen können PU-Schaumstoffe mit einer erhöhten Reißdehnung, sowie verbesserten Zug- und Weiterreißfestigkeit hergestellt werden. Nachteilig an diesen PU-Schaumstoffen ist lediglich, daß sie Fluorchlorkohlenwasserstoffe als Zellgas enthalten. Außerdem ist die Mischbarkeit der Prepolymere mit der Polyol-komponente ungenügend, was insbesondere zu ungenügenden Elastizitätseigenschaften der Schaumstoffe führt.

Die Aufgabe der vorliegenden Erfindung bestand darin, die mechanischen Eigenschaften von PU-Weich- und weichelastischen PU-Formschaumstoffen, die unter Verwendung von alternativen, d.h. FCKW freien Treibmitteln oder Treibmittelkombinationen, hergestellt werden, zu verbessern. Die hierfür verwendbaren PU-Formulierungen sollten innerhalb den Systemkomponenten in bezug auf Hydroxylzahlschwankungen in der Polyol-Komponente und Isocyanatindex bei der Schaumstoffherstellung sowie unterschiedlichen Schaumvorrichtung eine hohe Verarbeitungsbreite besitzen.

Eine gute Verträglichkeit der Systemkomponenten und ihre Mischbarkeit sowie die Mischbarkeit der Reaktionsmischung mit polaren Treibmitteln, wie z.B. Wasser oder Carboxylgruppen haltigen Verbindungen, oder unpolaren Treibmitteln, wie z.B. Alkanen oder Fluoralkanen, oder von Mischungen aus polaren und unpolaren Treibmitteln sollte gewährleistet sein. Durch diese Maßnahmen sollte die Verarbeitungssicherheit erhöht und die Ausschußquote auf ein Minimum reduziert werden.

Diese Aufgabe konnte überraschenderweise gelöst werden durch die Verwendung von flüssigen Polyisocyanatmischungen auf MDI-Basis, die mittels einer Mischung aus unpolaren und polaren Polyether-polyolen mit Urethangruppen modifiziert sind, zur Herstellung der PU-Schaumstoffe.

Gegenstand der Erfindung ist somit ein Verfahren zur Herstellung von FCKW freien PU-Weichschaumstoffen und weichelastischen PU-Formschaumstoffen durch Umsetzung von
A) flüssigen, Urethangruppen gebunden enthaltenden Polyisocyanatmischungen auf Diphenylmethan-diisocyanatbasis mit
B) Polyesterpolyolen, Polyetherpolyolen, hydroxylgruppenhaltigen Polyacetalen, Polycarbonaten und/ oder Polyesteramiden mit Molekulargewichten von 800 bis 8200 und
C) gegebenenfalls Kettenverlängerungsmitteln und/oder Vernetzungsmitteln mit Molekulargewichten von 18 bis 400
in Gegenwart von
D) Treibmitteln,
E) Katalysatoren
sowie gegebenenfalls
F) Hilfsmitteln und/oder Zusatzstoffen,
   das dadurch gekennzeichnet ist, daß die flüssigen Urethangruppen gebunden enthaltende Polyisocyanatmischungen (A) einen Gehalt an NCO-Gruppen von 20 bis 30 Gew.-%, bezogen auf das Gesamtgewicht, besitzen und erhalten werden
I) durch Umsetzung
   a) einer Mischung (I) aus Diphenylmethan-diisocyanaten und Polyphenyl-polymethylen-polyisocyanaten (Roh-MDI) mit einem Gehalt an Diphenylmethan-diisocyanat(MDI)-Isomeren von 35 bis 94 Gew.-%, bezogen auf das Gesamtgewicht, mit
   b) einer Polyether-polyolmischung (b), die enthält
      b₁) mindestens ein Polyoxypropylen-glykol mit einer Hydroxylzahl von 120 bis 25 und
      b₂) mindestens ein trifunktionelles Polyoxypropylen-polyoxyethylen-polyol mit einer Hydroxylzahl von 120 bis 25, und einem Gehalt an polymerisierten Ethylenoxideinheiten von 10 bis 90 Gew.-%, bezogen auf das Gewicht an polymerisierten Alkylenoxideinheiten
   oder
II) durch Verdünnung
   c) eines Urethangruppen enthaltenden Quasiprepolymeren mit einem NCO-Gehalt von 10 bis 19 Gew.-%, erhalten durch Umsetzung von 4,4'-Diphenylmethandiisocyanat (MDI) mit der Polyether-polyolmischung (b),
      mit einer Mischung (I) aus Diphenylmethan-diisocyanaten und Polyphenyl-polymethylen-polyisocyanaten (Roh-MDI).

Gegenstand der Erfindung sind ferner die für das erfindungsgemäße Verfahren zur Herstellung der FCKW freien PU-Weich(form)schaumstoffe verwendbaren flüssigen, Urethangruppen enthaltenden Polyisocyanatmischungen auf Diphenylmethan-diisocyanatbasis mit einem Gehalt an NCO-Gruppen von 20 bis 30 Gew.-%, die erhalten werden
I) durch Umsetzung
   a) einer Mischung (I) aus Diphenylmethan-diisocyanaten und Polyphenyl-polymethylen-polyisocyanaten (Roh-MDI) mit einem Gehalt an Diphenylmethan-diisocyanat(MDI)-Isomeren von 35 bis 94 Gew.-%, bezogen auf das Gesamtgewicht, mit
   b) einer Polyether-polyolmischung (b), die enthält
      b₁) mindestens ein Polyoxypropylen-glykol mit einer Hydroxylzahl von 120 bis 25 und
      b₂) mindestens ein trifunktionelles Polyoxypropylen-polyoxyethylen-polyol mit einer Hydroxylzahl von 120 bis 25, und einem Gehalt aus polymerisierten Ethylenoxideinheiten von 10 bis 90 Gew.-%, bezogen auf das Gewicht an polymerisierten Alkylenoxideinheiten
   oder
   II) durch Verdünnung
      c) eines Urethangruppen enthaltenden Quasiprepolymeren mit einem NCO-Gehalt von 10 bis 19 Gew.-%, erhalten durch Umsetzung von 4,4'-Diphenylmethandiisocyanat (MDI) mit der Polyether-polyolmischung (b), mit
      a) der vorgenannten Mischung (I) aus Diphenylmethan-diisocyanaten und Polyphenyl-polymethylen-polyisocyanaten (Roh-MDI) mit einem Gehalt an Diphenylmethan-diisocyanat(MDI)-Isomeren von 35 bis 94 Gew.-%, bezogen auf das Gesamtgewicht.

Die nach dem erfindungsgemäßen Verfahren unter Verwendung der speziellen, mit Urethangruppen modifizierten Polyisocyanatmischungen (A) hergestellten PU-Weich(form)schaumstoffe besitzen ein hohes mechanisches Eigenschaftsniveau, wobei je nach Art der Herstellung, einstufig (I) oder zweistufig (II), der mit Urethangruppen modifizierten Polyisocyanatmischungen (A), deren physikalischen Eigenschaften und die mechanischen Eigenschaften der daraus hergestellten PU-Schaumstoffe gezielt beeinflußt werden können. Werden die mit Urethangruppen modifizierten Polyisocyanatmischungen (A) nach dem weniger zeitaufwendigen und daher kostengünstigeren, einfach durchführbaren Einstufenverfahren (I) hergestellt, weisen die erhaltenen Polyisocyanatmischungen (A) eine, im Vergleich zu nach dem Zweistufenverfahren (II) erhaltenen, mit Urethangruppen modifizierten Polyisocyanatmischungen (A), erheblich niedrigere Viskosität auf. Aus derartigen Polyisocyanatmischungen gebildete Reaktionsmischungen sind längere Zeit fließfähig und zeigen ein deutlich besseres Fließverhalten, so daß auch Formwerkzeuge mit schwierig zu befüllenden Raumformen und engen Fließwegen relativ problemlos vollständig gefüllt werden können. Die hergestellten PU-Schaumstoffe besitzen ferner eine verbesserte Zugfestigkeit und Dehnung. Verwendet man hingegen zur Herstellung der PU-Schaumstoffe die höherviskosen, nach dem Zweistufenverfahren (II) hergestellten Urethangruppen enthaltenden Polyisocyanatmischungen, so erhält man Produkte mit einer geringeren Zugfestigkeit und Dehnung und dafür verbesserten Druckverformungsrest und Stauchhärte. Durch den Einsatz der Polyether-polyolmischung (b) konnte ferner die Kältestabilität der Polyisocyanatmischungen (A) verbessert werden.

Zur Herstellung der neuen, flüssigen Urethangruppen gebunden enthaltenden Polyisocyanatmischungen auf MDI-Basis (A) und zu den für das erfindungsgemäßen Verfahren zur Herstellung der FCKW freien PU-Weich(form)schaumstoffe verwendbaren anderen Aufbaukomponenten (B) bis (F) ist im einzelnen folgendes auszuführen:

Zur Herstellung der flüssigen, Urethangruppen gebunden enthaltenden Polyisocyanatmischungen (A) mit einem Gehalt an NCO-Gruppen von 20 bis 30 Gew.-%, vorzugsweise von 24 bis 29 Gew.-%, finden vorteilhafterweise die folgenden Roh-MDI (I)- und MDI-Isomeren (II)-Mischungen und Polyether-polyolmischungen (b) Verwendung:

Geeignete Mischungen (I) aus Diphenylmethan-diisocyanaten und Polyphenyl-polymethylen-polyisocyanaten, üblicherweise Roh-MDI genannt, besitzen neben höheren Homologen einen Gehalt an MDI-Isomeren von 35 bis 94 Gew.-%, vorzugsweise von 59 bis 85 Gew.-%. Vorzüglich bewährt haben sich Roh-MDI, die enthalten oder vorzugsweise bestehen aus, bezogen auf das Gesamtgewicht,
Ia1) 34 bis 68 Gew.-%, vorzugsweise 51 bis 65 Gew.-%, 4,4'-MDI,
Ia2) 1 bis 25 Gew.-%, vorzugsweise 8 bis 20 Gew.-% 2,4'-MDI,
Ia3) 0 bis 4 Gew.-%, vorzugsweise 0,5 bis 2,5 Gew.-% 2,2'-MDI und
Ia4) bis 65 Gew.-%, vorzugsweise 41 bis 15 Gew.-% mindestens trifunktionelle Polyphenyl-polymethylenpolyisocyanate.

Die erfindungsgemäß als Modifizierungsmittel verwendbaren Polyether-polyolmischungen (b) besitzen üblicherweise eine Funktionalität im Bereich von 2,05 bis 2,95, vorzugsweise von 2,2 bis 2,7 und enthalten oder vorzugsweise bestehen aus
b1) mindestens einem Polyoxypropylen-glykol mit einer Hydroxylzahl von 120 bis 25, vorzugsweise von 80 bis 40 und
b2) mindestens einem trifunktionellen Polyoxypropylen-polyoxyethylen-polyol mit einer Hydroxylzahl von 120 bis 25, vorzugsweise von 80 bis 40 und einem Gehalt an polymerisierten Ethylenoxideinheiten von 10 bis 90 Gew.-%, vorzugsweise von 20 bis 85 Gew.-% und insbesondere von 50 bis 80 Gew.-%, bezogen auf das Gesamtgewicht an polymerisierten Ethylenoxid- und Propylenoxideinheiten. Hierbei können die polymerisierten 1,2-Propyienoxid- und Ethylenoxidgruppen in statischer Verteilung oder als mittel- oder endständige Blöcke gebunden sein. In Abhängigkeit vom Gehalt an Ethylenoxideinheiten und dessen Stellung im Polyoxypropylen-polyoxyethylen-polyol kann dessen Reaktivität und die Mischbarkeit mit MDI bzw. Roh-MDI sowie den polaren und unpolaren Treibmitteln in der Reaktionsmischung gezielt den jeweiligen Erfordernissen angepaßt werden. Als Polyether-polyolmischungen (b) zur Modifizierung der MDI bzw. Roh-MDI finden zweckmäßigerweise solche Verwendung, die bezogen auf das Gesamtgewicht, enthalten oder vorzugsweise bestehen aus
b1) 80 bis 20 Gew.-%, vorzugsweise 60 bis 40 Gew.-% mindestens eines Polyoxypropylen-glykols mit einer Hydroxylzahl von 120 bis 25 und
b2) 20 bis 80 Gew.-%, vorzugsweise 40 bis 60 Gew.-% mindestens eines trifunktionellen Polyoxypropylen-polyoxyethylen-polyols mit einer Hydroxylzahl von 120 bis 25 und einem Gehalt an polymerisierten Ethylenoxideinheiten von 10 bis 90 Gew.-%, bezogen auf das Gewicht an polymerisierten Alkylenoxideinheiten. Die Polyoxypropylenglykole und trifunktionellen Polyoxypropylen-polyoxyethylen-polyole können somit jeweils einzeln oder als Mischungen Anwendung finden.

Sehr gut bewährt hat sich und daher insbesondere bevorzugt ist eine Polyether-polyolmischung (b), die besteht, bezogen auf das Gesamtgewicht, aus
b1) 50 Gew.-% eines Polyoxypropylen-glykols mit einer Hydroxylzahl von 56 und
b2) 50 Gew.-% eines mit Glycerin gestarteten Polyoxypropylen-polyoxyethylen-polyols mit einer Hydroxylzahl von 42 und einem Gehalt an polymerisierten Ethylenoxideinheiten von 70 Gew.-%, bezogen auf das Gesamtgewicht an polymerisierten Alkylenoxideinheiten.

Als Startermoleküle zur Herstellung der Polyoxypropylenglykole (b1) bzw. trifunktionellen Polyoxypropylen-polyoxyethylen-polyole (b2) in Gegenwart von basischen Katalysatoren kommen neben Wasser di- bzw. trifunktionelle Polyole in Betracht. Beispielhaft genannt seien die Startermoleküle Wasser, 1,2- und 1,3-Propylenglykol zur Polyoxypropylen-glykolherstellung und Trimethylolpropan und vorzugsweise Glycerin zur Polyoxypropylen-polyoxyethylenpolyolherstellung.

Gebräuchliche basische Katalysatoren sind Alkalialkoxide mit 1 bis 4 Kohlenstoffatomen im Alkylrest, wie Natriummethylat, Natrium- und Kaliumethylat, Kaliumisopropylat und Natriumbutylat, Erdalkalihydroxide, wie z.B. Calciumhydroxid und vorzugsweise Alkalihydroxide, insbesondere z.B. Natrium- und Kaliumhydroxid.

Zur Herstellung er erfindungsgemäß verwendbaren Urethangruppen enthaltenden Polyisocyanatmischung (A) nach der bevorzugten Verfahrensvariante (I) werden das Roh-MDI (I) und die Polyether-polyolmischung (b) aus mindestens einem Polyoxypropylen-glykol (b1) und mindestens einem trifunktionellen Polyoxypropylen-polyoxyethylen-polyol (b2) bei Temperaturen von 0 bis 100°C, vorzugsweise von 30 bis 80°C in solchen Mengen zur Reaktion gebracht, daß das NCO-:OH-Gruppenverhältnis 1:0,001 bis 1:0,19, vorzugsweise 1:0,01 bis 1:0,1 beträgt. Nach einer Reaktionszeit von 0,5 bis 6 Stunden, vorzugsweise von 1 bis 3 Stunden läßt man die lagerstabile Polyisocyanatmischung auf MDI-Basis (A), die einen Gehalt an NCO-Gruppen von 20 bis 30 Gew.-% besitzt, abkühlen.

Werden die erfindungsgemäß verwendbaren Polyisocyanatmischungen (A) nach der Verfahrensvariante (II) hergestellt, so wird 4,4'-MDI und die Polyether-polyolmischung (b) aus (b1) und (b2) bei Temperaturen von 0 bis 100°C, vorzugsweise von 30 bis 80°C in einer solchen Menge zur Reaktion gebracht, daß das Verhältnis von NCO-:OH-Gruppen 1:0,001 bis 1:0,2, vorzugsweise 1:0,02 bis 1:0,15 beträgt. Nach einer Reaktionszeit von 0,5 bis 6 Stunden, vorzugsweise von 1 bis 3 Stunden, läßt man das urethangruppenhaltige Quasiprepolymer auf MDI-Basis mit einem NCO-Gehalt von 10 bis 19 Gew.-%, vorzugsweise von 12 bis 18 Gew.-% abkühlen und verdünnt es mit Roh-MDI (I) bis zu einem NCO-Gehalt von 20 bis 30 Gew.-%, vorzugsweise von 24 bis 29 Gew.-%.

Nach einer vorteilhaften Ausgestaltung der Verfahrensvariante (II) werden
a) X Gew.-Teile 4,4'-MDI, wobei X einen Wert im Bereich von 34 bis 68 Gew.-Teilen bedeutet oder
   eine Mischung aus
   - X Gew.-Teilen: 4,4'-MDI und
   - Y Gew.-Teilen: 2,4'-MDI, wobei X die vorgenannte Bedeutung hat und Y einen Wert im Bereich von 1 bis 25 Gew.-Teilen bedeutet,
   mit
b) einer Polyether-polyolmischung (b), die (b1) und (b2) enthält
zu einem Urethangruppen enthaltenden Quasiprepolymeren mit einem NCO-Gehalt von 10 bis 19 Gew.-% umgesetzt.

Dieses Quasiprepolymere wird danach mit Roh-MDI, das enthält
Ia1) (34 bis 68) - X Gew.-Teile 4,4'-MDI,
Ia2) (1 bis 25) - Y Gew.-Teile 2,4'-MDI,
Ia3) 0 bis 4 Gew.-Teile 2,2-MDI und
Ia4) bis 65 Gew.-Teile mindestens trifunktionelle Polyphenyl-polymethylen-polyisocyanate verdünnt mit der Maßgabe, daß X+Y+Ia1+Ia2-Ia3+Ia4 sich zu 100 Gew.-Teilen addieren und der Gesamtgehalt an NCO-Gruppen einen Wert im Bereich von 20 bis 30 Gew.-% aufweist.

Die nach den VerfahrensvarLanten (I) und (II) hergestellten Urethangruppen gebunden enthaltenden Polyisocyanatmischungen (A) sind bei Temperaturen um 0°C über einen Zeitraum von mindestens 3 Monaten lagerbeständig und besitzen unterschiedliche Viskositäten, wobei, wie bereits ausgeführt, die nach der Verfahrensvariante (II) zweistufig hergestellten Polyisocyanatmischungen (A) bei gleichem NCO-Gehalt höherviskos sind.

Zur Herstellung der FCKW freien PU-Weichschaumstoffe oder weichelastischen PU-Formschaumstoffe werden die flüssigen, Urethangruppen gebunden enthaltenden Polyisocyanatmischungen auf MDI-Basis (A), wie bereits ausgeführt wurde, mit üblichen höhermolekularen Polyhydroxylverbindungen (B) und gegebenenfalls niedermolekularen Kettenverlängerungsmitteln und/ oder Vernetzungsmitteln (C) in Gegenwart von Treibmitteln (D), Katalysatoren (E) sowie gegebenenfalls Hilfsmitteln und/oder Zusatzstoffen (F) in offenen oder geschlossenen Formwerkzeugen verschäumt.

Als Komponente (B) finden hierzu vorzugsweise übliche lineare und/oder verzweigte Polyester-polyole und insbesondere Polyether-polyole mit Molekulargewichten von 800 bis 8200, vorzugsweise von 1200 bis 7000 und insbesondere von 1800 bis 6200 Anwendung. In Betracht kommen jedoch auch polymermodifizierte Polyether-polyole, Polyether-polyoldispersionen und Polyesteramide, Polyacetale und/oder Polycarbonate mit dem obengenannten Molekulargewichten, insbesondere solche, hergestellt aus Diphenylcarbonat und Hexandiol-1,6 durch Umesterung oder Mischungen aus mindestens zwei der genannten Polyhydroxylverbindungen.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen und/oder Dialkylen-glykolen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole und Dialkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.

Zur Herstellung der Polyester-polyole können die organischen, z.B. aromatischen und vorzugsweise aliphatischen Polycarbonsäuren und/oder -derivate und mehrwertigen Alkohole und/oder Alkylenglykole katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Die erhaltenen Polyester-polyole besitzen vorzugsweise eine Funktionalität von 2 bis 4, insbesondere 2 bis 3 und ein Molekulargewicht von 800 bis 3600, vorzugsweise 1200 bis 3000 und insbesondere 1800 bis 2500.

Insbesondere als Polyhydroxylverbindungen verwendet werden jedoch Polyether-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 4, vorzugsweise 2 bis 3 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin und Trialkanolamine wie z.B. Triethanolamin und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan und Pentaerythrit.

Die Polyether-polyole, vorzugsweise Polyoxypropylen- und Polyoxypropylen-polyoxyethylen-polyole, besitzen eine Funktionalität von 2 bis 4 und vorzugsweise 2 bis 3 und Molekulargewichte von 800 bis 8200, vorzugsweise 1200 bis 7000 und insbesondere 1800 bis 6200 und geeignete Polyoxytetramethylen-glykole ein Molekulargewicht bis ungefähr 3500.

Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.

Die Polyether-polyole können ebenso wie die Polyester-polyole einzeln oder in Form von Mischungen verwendet werden. Ferner können sie mit den Pfropf-polyether-polyolen oder Polyester-polyolen sowie den hydroxylgruppenhaltigen Polyesteramiden, Polyacetalen und/oder Polycarbonaten gemischt werden. Vorzüglich bewährt haben sich beispielsweise Mischungen mit einer Funktionalität von 2 bis 3 und einem Molekulargewicht von 800 bis 8200, die enthalten mindestens ein Polyether-polyol und mindestens ein polymermodifiziertes Polyether-polyol aus der Gruppe der Pfropfpolyether-polyole oder Polyether-polyoldispersionen, die als disperse Phase Polyharnstoffe, Polyhydrazide oder tertiäre Aminogruppen gebunden enthaltende Polyurethane enthalten.

Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie z.B. Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Die FCKW freien PU-Weich(form)schaumstoffe können ohne oder unter Mitverwendung von Kettenverlängerungs- und/oder Vernetzungsmitteln (C) hergestellt werden. Zur Modifizierung der mechanische Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als derartige Kettenverlängerungs- und/ oder Vernetzungsmittel kommen polyfunktionelle, insbesondere di- und trifunktionelle Verbindungen mit Molekulargewichten von 18 bis 400, vorzugsweise von 62 bis ungefähr 300 in Betracht. Verwendet werden beispielsweise Di- und/oder Trialkanolamine, wie z.B. Diethanolamin und Triethanolamin, Alkylenglykole, z.B. Diethylen- und Dipropylenglykol, aliphatische Diole und/oder Triole mit 2 bis 6 Kohlenstoffatomen im Alkylenrest, wie z.B. Ethan-, 1,3-Propan-, 1,4-Butan-, 1,5-Pentan-, 1,6-Hexandiol, Glycerin und/oder Trimethylolpropan und niedermolekulare Ethoxylierungs- und/oder Propoxylierungsprodukte, hergestellt aus den vorgenannten Di-, Trialkanolaminen, Diolen und/oder Triolen sowie aliphatischen und/oder aromatischen Diaminen wie z.B. 1,2-Ethan-, 1,4-Butan-, 1,6-Hexandiamin, 2,3-, 2,4- und/oder 2,6-Toluylen-diamin, 4,4'-Diamino-diphenylmethan, 3,3'-di- und/oder 3,3',5,5'-tetraalkyl-substituierten 4,4'-Diaminodiphenylmethanen als Startermolekülen und Alkylenoxid oder -gemischen.

Als Kettenverlängerungs- und/oder Vernetzungsmittel (C) vorzugsweise eingesetzt werden Dialkanolamine, Diole und/oder Triole und insbesondere Diethanolamin, Hexandiol-1,6, Butandiol-1,4, Trimethylolpropan und Glycerin oder Mischungen davon.

Die Kettenverlängerungs- und/oder Vernetzungsmittel (C), die vorzugsweise zur Herstellung der PU-Weich(form)schaumstoffe mitverwendet werden, kommen zweckmäßigerweise in solchen Gewichtsmengen zur Anwendung, daß pro Mol höhermolekularer Polyhydroxylverbindung (B) 0,01 bis 8 Mole, insbesondere 0,1 bis 3 Mole Kettenverlängerungsmittel und/oder Vernetzungsmittel in der Reaktionsmischung vorliegen.

Zu Treibmitteln (D), welche zur Herstellung der PU-Weich(form)schaumstoffe, verwendet werden können, gehört vorzugsweise Wasser, das mit Isocyanatgruppen unter Bildung von Kohlendioxid reagiert. Die Wassermengen, die zweckmäßigerweise eingesetzt werden, betragen 0,1 bis 8 Gew.-Teile, vorzugsweise 1,5 bis 5,0 Gew.-Teile und insbesondere 2,5 bis 3,5 Gew.-Teile, bezogen auf 100 Gew.-Teile der Polyhydroxylverbindungen (B).

Als Treibmittel geeignet sind ferner Flüssigkeiten, welche gegenüber den flüssigen mit Urethangruppen modifizierten Polyisocyanatmischungen (A) inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen sowie Mischungen aus solchen physikalisch wirkenden Treibmitteln und Wasser. Beispiele derartiger, vorzugsweise verwendbarer Flüssigkeiten sind Alkane, wie z.B. Heptan, Hexan, n- und iso-Pentan, vorzugsweise technische Gemische aus n-und iso-Pentanen, n- und iso-Butan und Propan, Cycloalkane, wie Cyclopentan und/oder Cyclohexan, Ether, z.B. wie Furan, Dimethylether und Diethylether, Ketone, wie z.B. Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlor-difluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise Verwendung finden Wasser, Chlordifluormethan, Chlordifluorethane, Dichlorfluorethane, Pentangemische, Cyclohexan und Mischungen aus mindestens zwei dieser Treibmittel, z.B. Mischungen aus Wasser und Cyclohexan, Mischungen aus Chlordifluormethan und 1-Chlor-2,2-difluorethan und gegebenenfalls Wasser. Als Treibmittel nicht verwendet werden Fluorchlorkohlenwasserstoffe, die die Ozonschicht schädigen.

Die erforderliche Menge an physikalisch wirkenden Treibmitteln kann in Abhängigkeit von der gewünschten Schaumstoffdichte und der gegebenenfalls eingesetzten Wassermenge auf einfache Weise experimentell ermittelt werden und beträgt ungefähr 0 bis 25 Gew.-Teile, vorzugsweise 0 bis 15 Gew.-Teile pro 100 Gew.-Teile der Polyhydroxylverbindungen. Gegebenenfalls kann es zweckmäßig sein, die Urethangruppen gebunden enthaltenden Polyisocyanatmischungen (A) mit dem inerten physikalisch wirkenden Treibmittel zu mischen und dadurch ihre Viskosität zu verringern.

Als Katalysatoren (E) zur Herstellung der FCKW freien PU-Weichschaumstoffe und weichelastischen PU-Formschaumstoffe werden vorzugsweise Verbindungen verwendet, die die Reaktion der Hydroxylgruppen enthaltenden Verbindungen der Komponenten (B) und gegebenenfalls (C) mit den flüssigen, Urethangruppen gebunden enthaltenden Polyisocyanatmischungen auf MDI-Basis (A) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinn-maleat und Dioctylzinn-diacetat und stark basische Amine, beispielsweise Amidine, wie z.B. 2,3-Dimethyl-3,4,5,6-tetrahydropyrimidin, tertiäre Amine, wie z.B. Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N', N'-Tetramethyl-hexandiamin-1,6, Di-(4-dimethylaminocyclohexyl)-methan, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen und Kombinationen aus den organischen Metallverbindungen und stark basischen Aminen. Vorzugsweise verwendet werden 0,001 bis 5 Gew.-%, insbesondere 0,05 bis 2 Gew.-% Katalysator bzw. Katalysatorkombination bezogen auf das Gewicht der Polyhydroxylverbindung (B).

Der Reaktionsmischung zur Herstellung der PU-Weich(form)schaumstoffe können gegebenenfalls auch noch Hilfsmittel und/oder Zusatzstoffe (F) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Polyhydroxylverbindungen (B), angewandt.

Als Füllstoffe, insbesondere verstärkend wirkende Füllstoffe, sind die an sich bekannten, üblichen organischen und anorganischen Füllstoffe, Verstärkungsmittel und Beschwerungsmittel zu verstehen. Im einzelnen seien beispielhaft genannt: anorganische Füllstoffe wie z.B. silikatische Mineralien, beispielsweise Schichtsilikate wie Antigorit, Serpentin, Hornblenden, Amphibole, Chrysolith, Zeolithe, Talkum; Metalloxide, wie z.B. Kaolin, Aluminiumoxide, Aluminiumsilikat, Titanoxide und Eisenoxide, Metallsalze, wie z.B. Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.-%, bezogen auf das Gewicht der Komponenten (A) bis (C), einverleibt.

Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, Aluminiumoxidhydrat, Antimontrioxid, Arsenoxid, Ammoniumpolyphosphat, Blähgraphit und Calciumsulfat oder Cyanursäurederivate, wie z.B. Melamin oder Mischungen aus mindestens zwei Flammschutzmitteln, wie z.B. Ammoniumpolyphosthaten und Melamin und/oder Blähgraphit sowie gegebenenfalls Stärke zum Flammfestmachen der erfindungsgemäß hergestellten PU-Weich(form)schaumstoffe verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Komponenten (A) bis (C) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der PU-Weich(form)schaumstoffe werden die flüssigen Urethangruppen gebunden enthaltenden Polyisocyanatmischungen (A), höhermolekularen Polyhydroxylverbindungen (B) und gegebenenfalls Kettenverlängerungs- und/oder Vernetzungsmittel (C) in Gegenwart von Treibmitteln (D), Katalysatoren (E) und gegebenenfalls Hilfsmitteln und/oder Zusatzstoffen (F) bei Temperaturen von 0 bis 100°C, vorzugsweise 15 bis 80°C in solchen Mengenverhältnissen zur Reaktion gebracht, daß pro NCO-Gruppe 0,5 bis 2, vorzugsweise 0,8 bis 1,3 und insbesondere ungefähr ein reaktive(s) Wasserstoffatom(e) gebunden an die Ausgangskomponenten (B) und gegebenenfalls (C) vorliegen und, sofern Wasser als Treibmittel verwendet wird, das Molverhältnis von Äquivalente Wasser zu Äquivalente NCO-Gruppe 0,5 bis 5 : 1, vorzugsweise 0,7 bis 0,95 : 1 und insbesondere 0,75 bis 0,85 : 1 beträgt.

Die PU-Weich(form)schaumstoffe werden zweckmäßigerweise nach dem one shot-Verfahren durch Vermischen von zwei Komponenten hergestellt, wobei die Ausgangskomponenten (B), (D), (E) und gegebenenfalls (C) und (F) zu der sogenannten Polyol-Komponente vereinigt und als Polyisocyanat-Komponente die Urethangruppen gebunden enthaltende Polyisocyanatmischung gegebenenfalls im Gemisch mit (F) und inerten, physikalisch wirkenden Treibmitteln verwendet werden. Da die Polyol-Komponente und Polyisocyanat-Komponente sehr gut lagerstabil sind, müssen diese vor Herstellung der PU-Weich(form)schaumstoffe nur noch intensiv gemischt werden. Die Reaktionsmischung kann in offenen oder geschlossenen Formwerkzeugen verschäumt werden; sie eignet sich ferner zur Herstellung von Blockschaumstoffen.

Zur Herstellung von PU-Weichformschaumstoffen wird die Reaktionsmischung vorteilhafterweise mit einer Temperatur von 15 bis 80°C, vorzugsweise 30 bis 65°C in ein zweckmäßigerweise metallisches temperierbares Formwerkzeug eingebracht. Die Formwerkzeugtemperatur beträgt üblicherweise 20 bis 90°C, vorzugsweise 35 bis 70°C. Die Reaktionsmischung läßt man unter Verdichtung z.B. bei Verdichtungsgraden von 1,1 bis 8, vorzugsweise von 2 bis 6 und insbesondere 2,2 bis 4 in dem geschlossenen Formwerkzeug aushärten.

Die PU-Weichschaumstoffe besitzen freigeschäumte Dichten von 30 bis 45 g/l vorzugsweise von 32 bis 40 g/l und insbesondere von 35 bis 38 g/l. Aus derartigen Schaumstoff-Formulierungen hergestellte weichelastische PU-Schaumstoff-Formkörper besitzen in Abhängigkeit vom angewandten Verdichtsgrad eine Gesamtdichte von 40 bis 60 g/l, vorzugsweise von 45 bis 55 g/l, wobei die PU-Formweichschaumstoffe für Schuhsohlen eine Dichte von insbesondere 400 bis 650 g/l aufweisen.

Die nach dem erfindungsgemäßen Verfahren hergestellten PU-Weichschaumstoffe eignen sich z.B. als Sitzpolster für Polstermöbel und die PU-Formweichschaumstoffe als Polsterelemente, Armlehne, Kopfstützen, Sonnenblenden und Sicherheitsabdeckungen in Fahrzeugkabinen, vorzugsweise in Kraftfahrzeugen und Flugzeugen. Vorzüglich bewährt haben sich PU-Formweichschaumstoffe ferner als Innenschuh von Berg- und Skistiefeln und insbesondere als Schuhsohle.

### Beispiele

Herstellung der flüssigen, Urethangruppen gebunden enthaltenden Polyisocyanatmischungen auf MDI-Basis nach dem Einstufenverfahren

### Beispiel 1

Zu einer Mischung aus Diphenylmethan-diisocyanaten und Polyphenylpolymethylen-polyisocyanaten (Roh-MDI), die bestand aus
4080 Gew.-Teilen (58,3 Gew.-%) 4,4'-MDI,
1000 Gew.-Teilen (14,3 Gew.-%) 2,4'-MDI,
120 Gew.-Teilen ( 1,7 Gew.-%) 2,2'-MDI
   und
1800 Gew.-Teilen (25,7 Gew.-%) mindestens trifunktionellen Polyphenyl-polymethylen-polyisocyanaten
fügte man unter Rühren bei 80°C eine Mischung aus
900 Gew.-Teilen eines mit 1,3-Propandiol gestarteten Polyoxypropylen-glykols mit einer Hydroxylzahl von 56 (entsprechend einem Molekulargewicht von 2000)
   und
900 Gew.-Teilen eines mit Glycerin gestarteten Polyoxypropylen-polyoxyethylen-polyols mit einer Hydroxylzahl von 46 (entsprechend einem Molekulargewicht von 4000) und einem Gehalt an polymerisierten Ethylenoxideinheiten von 70 Gew.-%, bezogen auf das Gesamtgewicht an Alkylenoxideinheiten.

Nach einer Nachreaktionszeit von einer Stunde bei 80°C ließ man diese Urethangruppen enthaltende Polyisocyanatmischung auf Raumtemperatur abkühlen. Das Produkt besaß einen NCO-Gehalt von 25 Gew.-% und eine Viskosität bei 25°C von 210 mPas.

### Vergleichsbeispiel VB1

Man verfuhr analog den Angaben des Beispiels 1, verwendete jedoch 1800 Gew.-Teile des mit 1,3-Propandiol gestarteten Polyoxypropylen-glykols mit der Hydroxylzahl von 56.

Die erhaltene mit Urethangruppen modifizierte Polyisocyanatmischung besaß einen NCO-Gehalt von 25 Gew.-% und eine Viskosität bei 25°C von 168 mPas.

### Beispiel 2

Zu einem Roh-MDI, das bestand aus
5220 Gew.-Teilen (52,2 Gew.-%) 4,4'-MDI,
1080 Gew.-Teilen (10,8 Gew.-%) 2,4'-MDI,
120 Gew.-Teilen ( 1,2 Gew.-%) 2,2'-MDI
   und
3600 Gew.-Teilen (36 Gew.-%) mindestens trifunktionellen Polyphenyl-polymethylen-polyisocyanaten
fügte man unter Rühren bei 80°C eine Mischung aus
1250 Gew.-Teilen des vorgenannten mit 1,3-Propandiol gestarteten Polyoxypropylen-glykols mit der Hydroxylzahl von 56
   und
1250 Gew.-Teilen des vorgenannten mit Glycerin gestarteten Polyoxypropylen-polyoxyethylen-polyols mit der Hydroxylzahl von 46.

Nach einer Nachreaktionszeit von einer Stunde bei 80°C ließ man diese Urethangruppen enthaltende Polyisocyanatmischung auf Raumtemperatur abkühlen. Das Produkt besaß einen NCO-Gehalt von 25 Gew.-% und eine Viskosität bei 25°C von 379 mPas.

### Vergleichsbeispiel VB2

Man verfuhr analog den Angaben des Beispiels 2, verwendete jedoch 2400 Gew.-Teile des mit 1,3-Propandiol gestarteten Polyoxypropylen-glykols mit der Hydroxylzahl von 56.

Die erhaltene mit Urethangruppen modifizierte Polyisocyanatmischung besaß einen NCO-Gehalt von 25 Gew.-% und eine Viskosität bei 25°C von 305 mPas.

Herstellung der flüssigen, Urethangruppen gebunden enthaltenden Polyisocyanatmischung auf MDI-Basis nach dem Zweistufenverfahren.

### Beispiel 3

Zu 3000 Gew.-Teilen 4,4'-MDI fügte man unter Rühren bei 80°C eine Mischung, die bestand aus
900 Gew.-Teilen des vorgenannten mit 1,3-Propandiol gestarteten Polyoxypropylen-glykols mit der Hydroxylzahl von 56
   und
900 Gew.-Teilen des vorgenannten mit Glycerin gestarteten Polyoxypropylen-polyoxyethylen-polyols mit der Hydroxylzahl von 46.

Nach einer Nachreaktionszeit von einer Stunde bei 80°C ließ man das Urethangruppen enthaltende Quasiprepolymere, das einen NCO-Gehalt von 15,9 Gew.-% aufwies, auf Raumtemperatur abkühlen und verdünnte es danach mit 4000 Gew.-Teilen Roh-MDI, das bestand aus
1080 Gew.-Teilen (27 Gew.-%) 4,4'-MDI,
1000 Gew.-Teilen (25 Gew.-%) 2,4'-MDI,
120 Gew.-Teilen ( 3 Gew.-%) 2,2'-MDI
   und
1800 Gew.-Teilen (45 Gew.-%) mindestens trifunktionellen Polyphenyl-polymethylen-polyisocyanaten.

Die erhaltene Urethangruppen gebunden enthaltende Polyisocyanatmischung besaß einen NCO-Gehalt von 25 Gew.-% und eine Viskosität bei 25°C von 336 mPas.

### Vergleichsbeispiel VB3

Man verfuhr analog den Angaben von Beispiel 3, verwendete jedoch 1800 Gew.-Teile des mit 1,3-Propandiol gestarteten Polyoxypropylen-glykols mit der Hydroxylzahl von 56.

Das hierbei erhaltene Quasiprepolymer besaß einen NCO-Gehalt von 15,7 Gew.-%. Die durch Verdünnen mit Roh-MDI erhaltene Urethangruppen gebunden enthaltende Polyisocyanatmischung besaß einen NCO-Gehalt von 25 Gew.-% und eine Viskosität bei 25°C von 211 mPas.

### Herstellung von weichelastischen PU-Formschaumstoffen

### Beispiele 4 bis 10 und Vergleichsbeispiele VB4 bis VB12

Polyolkomponente: Mischung, die bestand aus
86,24 Gew.-Teilen eines mit Glycerin gestarteten Polyoxypropylen (86 Gew.-%)polyoxyethylen (14 Gew.-%)-polyols mit einem Molekulargewicht von ungefähr 6000,
27,54 Gew.-Teilen eines Pfropfpolyether-polyols mit einem Molekulargewicht von ungefähr 6000 und einem Pfropfpolymergehalt von 20 Gew.-%, hergestellt aus einem mit Trimethylolpropan gestarteten Polyoxypropylen (84 Gew.-%)-polyoxyethylen (16 Gew.-%)-polyol als Pfropfgrundlage und einer Mischung aus Acrylnitril und Styrol als Pfropfauflage (Bayfit® 3699 der Bayer AG),
2,87 Gew.-Teilen Wasser,
0,47 Gew.-Teilen einer 33 gew.-%igen Lösung von Triethylendiamin in Dipropylenglykol,
0,12 Gew.-Teilen einer 70 gew.-%igen Lösung von Bis-(N,N-dimethylaminoethyl)-ether in Dipropylen-glykol,
0,17 Gew.-Teilen N,N,N',N'-Tetramethylhexamethylendiamin-1,6 und
0,69 Gew.-Teilen eines Siliconstabilisators (Tegostab® B 8701 der Firma Goldschmidt),

Polyisocyanatkomponente: Nach Angaben der Beispiele 1 bis 3 und Vergleichsbeispiel VB1 bis VB3 hergestellte flüssige, Urethangruppen gebunden enthaltende Polyisocyanatmischungen auf MDI-Basis.

Zur Herstellung der weichelastischen PU-Formschaumstoffe wurden die Polyol- und Polyisocyanatkomponenten bei 23°C in Mengen entsprechend dem nachfolgend genannten NCO-Index 8 Sekunden intensiv gemischt. Ungefähr 700 bis 1000 g der erhaltenen Reaktionsmischung wurden in ein auf 50°C temperiertes metallisches Formwerkzeug mit den inneren Abmessungen 40 x 40 x 10 cm eingefüllt, das Formwerkzeug geschlossen und die Reaktionsmischung aufschäumen gelassen.

Die gebildeten weichelastischen PU-Formkörper wurden nach 4 Minuten entformt.

Die verwendeten Polyisocyanatmischungen und NCO-Index sowie die an den erhaltenen PU-Formkörpern gemessenen mechanischen Eigenschaften sind in der folgenden Tabelle zusammengefaßt.

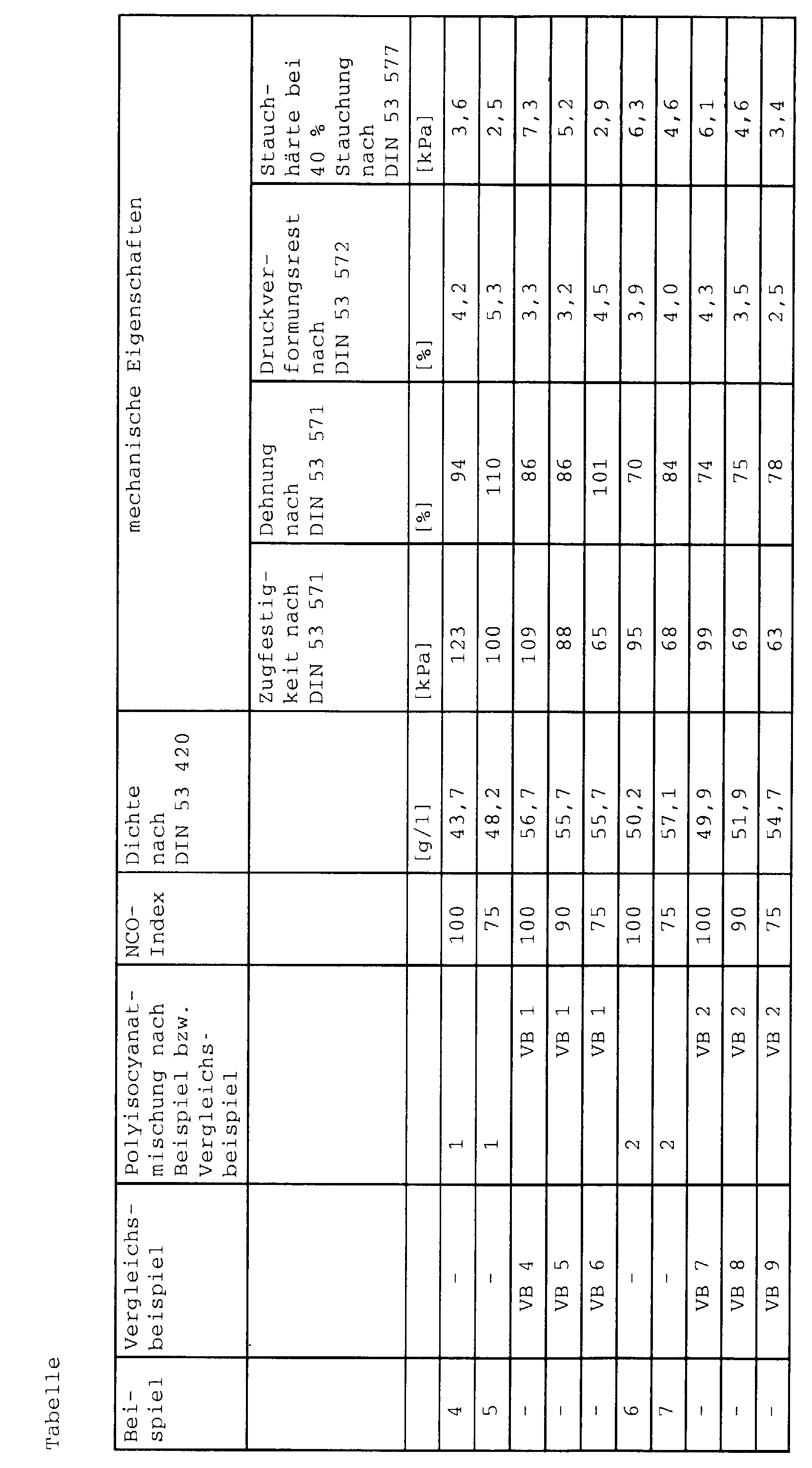

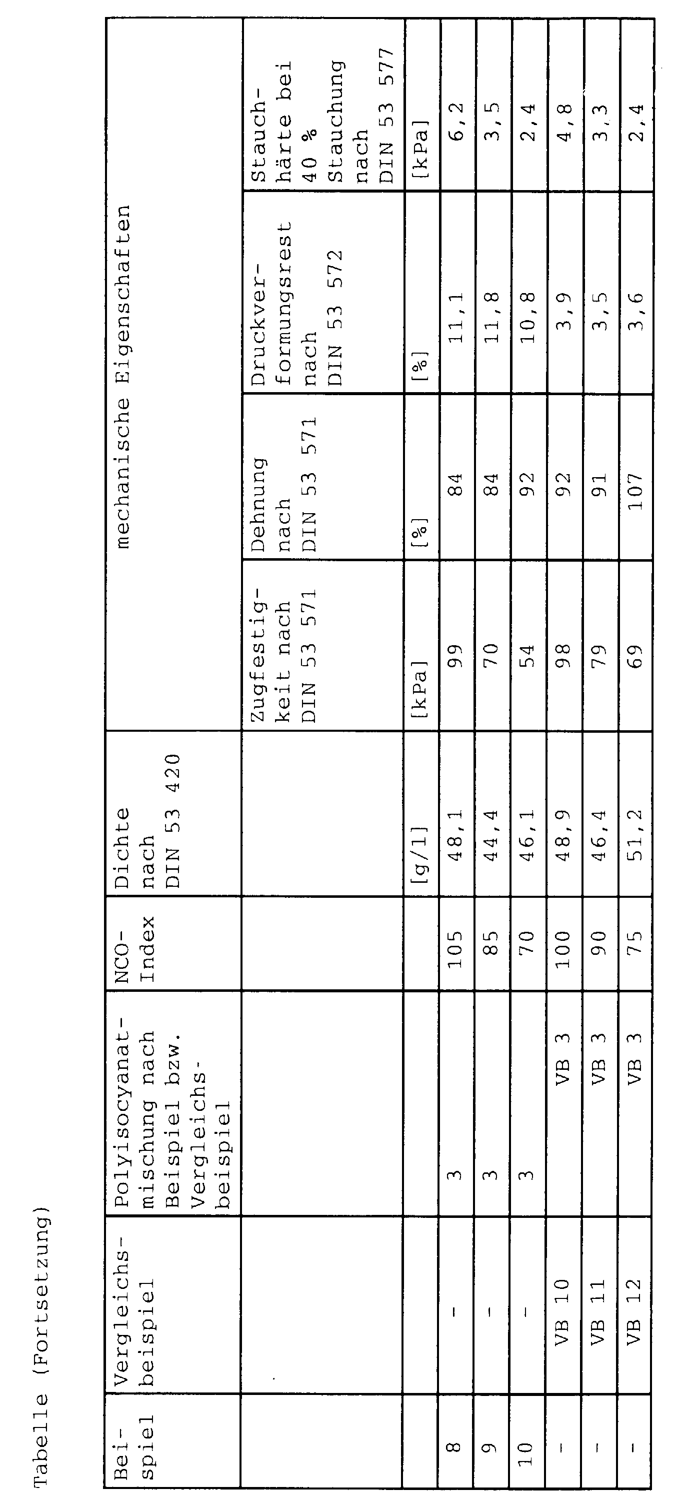

## Patentansprüche

1. Verfahren zur Herstellung von Fluorchlorkohlenwasserstoff freien Polyurethan-Weichschaumstoffen und weichelastischen PU-Formschaumstoffen durch Umsetzung von
A) flüssigen, Urethangruppen gebunden enthaltenden Polyisocyanatmischungen auf Diphenylmethan-diisocyanatbasis mit
B) Polyesterpolyolen, Polyetherpolyolen, hydroxylgruppenhaltigen Polyacetalen, Polycarbonaten und/ oder Polyesteramiden mit Molekulargewichten von 800 bis 8200 und
C) gegebenenfalls Kettenverlängerungsmitteln und/oder Vernetzungsmitteln mit Molekulargewichten von 18 bis 400
in Gegenwart von
D) Treibmitteln,
E) Katalysatoren
sowie gegebenenfalls
F) Hilfsmitteln und/oder Zusatzstoffen,
dadurch gekennzeichnet, daß die flüssigen Urethangruppen gebunden enthaltende Polyisocyanatmischung (A) einen Gehalt an NCO-Gruppen von 20 bis 30 Gew.-%, bezogen auf das Gesamtgewicht, besitzen und erhalten werden
I) durch Umsetzung
a) einer Mischung (I) aus Diphenylmethan-diisocyanaten und Polyphenyl-polymethylen-polyisocyanaten mit einem Gehalt an Diphenylmethan-diisocyanat-Isomeren von 35 bis 94 Gew.-%, bezogen auf das Gesamtgewicht, mit
b) einer Polyether-polyolmischung (b), bestehend aus
b₁) mindestens einem Polyoxypropylen-glykol mit einer Hydroxylzahl von 120 bis 25 und
b₂) mindestens einem trifunktionellen Polyoxypropylen-polyoxyethylen-polyol mit einer Hydroxylzahl von 120 bis 25, und einem Gehalt an polymerisierten Ethylenoxideinheiten von 10 bis 90 Gew.-%, bezogen auf das Gewicht an polymerisierten Alkylenoxideinheiten
oder
II) durch Verdünnung
c) eines Urethangruppen enthaltenden Quasiprepolymeren mit einem NCO-Gehalt von 10 bis 19 Gew.-%, erhalten durch Umsetzung von 4,4'-Diphenylmethandiisocyanat mit der Polyether-polyolmischung (b), mit einer Mischung (I) aus Diphenylmethan-diisocyanaten und Polyphenyl-polymethylen-polyisocyanaten.

2. Verfahren nach Anspruch 1, dadurch gekennzeichnet, daß die Mischung (I) aus Diphenylmethan-diisocyanaten und Polyphenyl-polymethylen-polyisocyanaten, bezogen auf das Gesamtgewicht, aus
Ia1) 34 bis 68 Gew.-% 4,4'-Diphenylmethan-diisocyanat,
Ia2) 1 bis 25 Gew.-% 2,4'-Diphenylmethan-diisocyanat,
Ia3) 0 bis 4 Gew.-% 2,2'-Diphenylmethan-diisocyanat und
Ia4) bis 65 Gew.-% mindestens trifunktionellen Polyphenyl-polymethylen-polyisocyanaten
besteht.

3. Verfahren nach Anspruch 1, dadurch gekennzeichnet, daß zur Herstellung der Urethangruppen enthaltenden Polyisocyanatmischungen (A) eine Polyether-polyolmischung (b) verwendet wird, die, bezogen auf das Gesamtgewicht, aus
b1) 80 bis 20 Gew.-% mindestens eines Polyoxypropylen-glykols mit einer Hydroxylzahl von 120 bis 25 und
b2) 20 bis 80 Gew.-% mindestens eines trifunktionellen Polyoxypropylen-polyoxyethylen-polyols mit einer Hydroxylzahl von 120 bis 25 und einem Gehalt an polymerisierten Ethylenoxideinheiten von 10 bis 90 Gew.-%, bezogen auf das Gewicht an polymerisierten Alkylenoxideinheiten
besteht.

4. Verfahren nach Anspruch 1, dadurch gekennzeichnet, daß zur Herstellung der Urethangruppen enthaltenden Polyisocyanatmischung (A) eine Polyether-polyolmischung (b) verwendet wird, die, bezogen auf das Gesamtgewicht, besteht aus
b1) 50 Gew.-% eines Polyoxypropylen-glykols mit einer Hydroxylzahl von 56 und
b2) 50 Gew.-% eines mit Glycerin gestarteten Polyoxypropylen-polyoxyethylen-polyols mit einer Hydroxylzahl von 42 und einem Gehalt an polymerisierten Ethylenoxideinheiten von 70 Gew.-%, bezogen auf das Gesamtgewicht an polymerisierten Alkylenoxideinheiten.

5. Verfahren nach Anspruch 1, dadurch gekennzeichnet, daß man als Komponente (B) Polyether-polyole mit einer Funktionalität von 2 bis 3 und einem Molekulargewicht von 800 bis 8200 oder Mischungen mit einer Funktionalität von 2 bis 3 und einem Molekulargewicht von 800 bis 8200 verwendet aus derartigen Polyether-polyolen und polymermodifizierten Polyether-polyolen aus der Gruppe der Pfropfpolyether-polyole oder Polyether-polyoldispersionen, die als disperse Phase Polyharnstoffe, Polyhydrazide oder tertiäre Aminogruppen gebunden enthaltende Polyurethane enthalten.

6. Verfahren nach Anspruch 1, dadurch gekennzeichnet, daß man als Treibmittel (D) Wasser oder physikalische wirkende Treibmittel oder eine Mischung aus Wasser und physikalisch wirkenden Treibmittel verwendet mit der Maßgabe, daß als physikalisch wirkende Treibmittel Flüssigkeiten, welche gegenüber den flüssigen, mit Urethangruppen modifizierten Polyisocyanatmischungen (A) inert sind und Siedepunkte unter 100°C aufweisen, eingesetzt werden und Fluorchlorkohlenwasserstoffe ausgenommen sind.

7. Flüssige, Urethangruppen gebunden enthaltende Polyisocyanatmischungen auf Diphenylmethan-diisocyanatbasis mit einem Gehalt an NCO-Gruppen von 20 bis 30 Gew.-%, erhalten
I) durch Umsetzung
a) einer Mischung (I) aus Diphenylmethan-diisocyanaten und Polyphenyl-polymethylen-polyisocyanaten mit einem Gehalt an Diphenylmethan-diisocyanat-Isomeren von 35 bis 94 Gew.-%, bezogen auf das Gesamtgewicht, mit
b) einer Polyether-polyolmischung (b), bestehend aus
b₁) mindestens ein Polyoxypropylen-glykol mit einer Hydroxylzahl von 120 bis 25 und
b2) mindestens ein trifunktionelles Polyoxypropylen-polyoxyethylen-polyol mit einer Hydroxylzahl von 120 bis 25, und einem Gehalt aus polymerisierten Ethylenoxideinheiten von 10 bis 90 Gew.-%, bezogen auf das Gewicht an polymerisierten Alkylenoxideinheiten
oder
II) durch Verdünnung
c) eines Urethangruppen enthaltenden Quasiprepolymeren mit einem NCO-Gehalt von 10 bis 19 Gew.-%,
erhalten durch Umsetzung von 4,4'-Diphenylmethan-diisocyanat mit der Polyether-polyolmischung (b),
mit
a) der vorgenannten Mischung (I) aus Diphenylmethan-diisocyanaten und Polyphenyl-polymethylen-polyisocyanaten mit einem Gehalt an Diphenylmethan-diisocyanat-Isomeren von 35 bis 94 Gew.-%, bezogen auf das Gesamtgewicht.

8. Flüssige, Urethangruppen enthaltende Polyisocyanatmischungen nach Anspruch 8, dadurch gekennzeichnet, daß die Mischung (I) aus Diphenylmethan-diisocyanaten und Polyphenyl-polymethylen-polyisocyanaten, bezogen auf das Gesamtgewicht, aus
Ia1) 34 bis 68 Gew.-% 4,4'-Diphenylmethan-diisocyanat,
Ia2) 1 bis 25 Gew.-% 2,4'-Diphenylmethan-diisocyanat,
Ia3) 0 bis 4 Gew.-% 2,2'-Diphenylmethan-diisocyanat und
Ia4) bis 65 Gew.-% mindestens trifunktionellen Polyphenyl-polymethylen-polyisocyanaten.
besteht.

9. Flüssige, Urethangruppen enthaltende Polyisocyanatmischungen nach Anspruch 8 bis 11, dadurch gekennzeichnet, daß die Polyether-polyolmischung (b), bezogen auf das Gesamtgewicht, aus
b1) 80 bis 20 Gew.-% mindestens eines Polyoxypropylen-glykols mit einer Hydroxylzahl von 120 bis 25 und
b2) 20 bis 80 Gew.-% mindestens eines trifunktionellen Polyoxypropylen-polyoxyethylen-polyols mit einer Hydroxylzahl von 120 bis 25 und einem Gehalt an polymerisierten Ethylenoxideinheiten von 10 bis 90 Gew.-%, bezogen auf das Gewicht an polymerisierten Alkylenoxideinheiten,
besteht.

10. Flüssige, Urethangruppen enthaltende Polyisocyanatmischungen nach Anspruch 8 oder 12, dadurch gekennzeichnet, daß die Polyether-polyolmischung (b), bezogen auf das Gesamtgewicht, besteht aus
b1) 50 Gew.-% eines Polyoxypropylen-glykols mit einer Hydroxylzahl von 56 und
b2) 50 Gew.-% eines mit Glycerin gestarteten Polyoxypropylen-polyoxyethylen-polyols mit einer Hydroxylzahl von 42 und einem Gehalt an polymerisierten Ethylenoxideinheiten von 70 Gew.-%, bezogen auf das Gesamtgewicht an polymerisierten Alkylenoxideinheiten.

## Claims

1. A process for the preparation of CFC-free flexible PU foams and flexible, elastic PU molded foams by reacting
A) liquid diphenylmethane diisocyanate-based polyisocyanate mixtures containing bonded urethane groups with
B) polyester-polyols, polyether-polyols, hydroxylcontaining polyacetals, polycarbonates and/or polyester-amides having molecular weights of from 800 to 8200, and
C) if desired chain extenders and/or crosslinking agents having molecular weights of from 18 to 400,
in the presence of
D) blowing agents,
E) catalysts
and, if desired,
F) assistants and/or additives,
wherein the liquid polyisocyanate mixtures (A) containing bonded urethane groups contain from 20 to 30% by weight of NCO groups, based on the total weight, and are obtained
I) by reacting
a) a mixture (I) of diphenylmethane diisocyanates and polyphenyl-polymethylene polyisocyanates containing from 35 to 94% by weight, based on the total weight, of diphenylmethane diisocyanate isomers, with
b) a polyether-polyol mixture (b) comprising
b₁) at least one polyoxypropylene glycol having a hydroxyl number of from 120 to 25, and b₂) at least one trifunctional polyoxypropylene-polyoxyethylene-polyol having a hydroxyl number of from 120 to 25 and containing from 10 to 90% by weight, based on the weight of polymerized alkylene oxide units, of polymerized ethylene oxide units,
or
II) by diluting
c) a quasi-prepolymer containing urethane groups and containing from 10 to 19% by weight of NCO, obtained by reacting 4,4'-diphenylmethane diisocyanate with the polyether-polyol mixture (b),
using a mixture (I) of diphenylmethane diisocyanates and polyphenyl-polymethylene polyisocyanates.

2. A process as claimed in claim 1, wherein the mixture (I) of diphenylmethane diisocyanates and polyphenyl-polymethylene polyisocyanates comprises, based on the total weight,
Ia1) from 34 to 68% by weight of 4,4'-diphenylmethane diisocyanate,
Ia2) from 1 to 25% by weight of 2,4'-diphenylmethane diisocyanate,
Ia3) from 0 to 4% by weight of 2,2'-diphenylmethane diisocyanate and
Ia4) up to 65% by weight of at least trifunctional polyphenyl-polymethylene polyisocyanates.

3. A process as claimed in claim 1, wherein, in order to prepare the polyisocyanate mixtures (A) containing urethane groups, a polyether-polyol mixture (b) is used, which comprises, based on the total weight,
b1) from 80 to 20% by weight of at least one polyoxypropylene glycol having a hydroxyl number of from 120 to 25 and
b2) from 20 to 80% by weight of at least one trifunctional polyoxypropylene-polyoxyethylene-polyol having a hydroxyl number of from 120 to 25 and having a content of polymerized ethylene oxide units of from 10 to 90% by weight, based on the weight of polymerized alkylene oxide units.

4. A process as claimed in claim 1, wherein, in order to prepare the polyisocyanate mixtures (A) containing urethane groups, a polyether-polyol mixture (b) is used, which comprises, based on the total weight,
b1) 50% by weight of a polyoxypropylene glycol having a hydroxyl number of 56 and
b2) 50% by weight of a glycerol-initiated polyoxypropylene-polyoxyethylene-polyol having a hydroxyl number of 42 and having a content of polymerized ethylene oxide units of 70% by weight, based on the weight of polymerized alkylene oxide units.

5. A process as claimed in claim 1, wherein component (B) comprises polyether-polyols having a functionality of from 2 to 3 and a molecular weight of from 800 to 8200 or mixtures, having a functionality of from 2 to 3 and a molecular weight of from 800 to 8200, of polyether-polyols of this type and polymer-modified polyether-polyols from the group consisting of the graft polyether-polyols, or polyether-polyol dispersions containing, as the disperse phase, polyureas, polyhydrazides or polyurethanes containing bonded tertiary amino groups.

6. A process as claimed in claim 1, wherein the blowing agent (D) is water or a physical blowing agent or a mixture of water and a physical blowing agent, with the proviso that the physical blowing agent used is a liquid which is inert toward the liquid polyisocyanate mixtures (A) modified with urethane grounds and has a boiling point below 100°C, but excluding chlorofluorocarbons.

7. A liquid, diphenylmethane diisocyanate-based polyisocyanate mixture containing bonded urethane groups and containing from 20 to 30% by weight of NCO groups, obtained
I) by reacting
a) a mixture (I) of diphenylmethane diisocyanates and polyphenylene-polymethylene polyisocyanates containing from 35 to 94% by weight, based on the total weight, of diphenylmethane diisocyanate isomers, with
b) a polyether-polyol mixture (b) comprising
b₁) at least one polyoxypropylene glycol having a hydroxyl number of from 120 to 25, and
b₂) at least one trifunctional polyoxypropylene-polyoxyethylene-polyol having a hydroxyl number of from 120 to 25 and containing from 10 to 90% by weight, based on the weight of polymerized alkylene oxide units, of polymerized ethylene oxide units,
or
II) by diluting
c) a quasi-prepolymer containing urethane groups and containing from 10 to 19% by weight of NCO, obtained by reacting 4,4'-diphenylmethane diisocyanate with the polyether-polyol mixture (b),
a) using the abovementioned mixture (I) of diphenylmethane diisocyanates and polyphenyl-polymethylene polyisocyanates containing from 35 to 94% by weight, based on the total weight, of diphenylmethane diisocyanate isomers.

8. A liquid polyisocyanate mixture containing urethane groups as claimed in claim 7, wherein the mixture (I) of diphenylmethane diisocyanates and polyphenyl-polymethylene polyisocyanates comprises, based on the total weight,
Ia1) from 34 to 68% by weight of 4,4'-diphenylmethane diisocyanate,
Ia2) from 1 to 25% by weight of 2,4'-diphenylmethane diisocyanate,
Ia3) from 0 to 4% by weight of 2,2'-diphenylmethane diisocyanate and
Ia4) up to 65% by weight of at least trifunctional polyphenyl-polymethylene polyisocyanates.

9. A liquid polyisocyanate mixture containing urethane groups as claimed in any of claims 7 or 8 , wherein the polyether-polyol mixture (b) comprises, based on the total weight,
b1) from 80 to 20% by weight of at least one polyoxypropylene glycol having a hydroxyl number of from 120 to 25 and
b2) from 20 to 80% by weight of at least one trifunctional polyoxypropylene-polyoxyethylene-polyol having a hydroxyl number of from 120 to 25 and having a content of polymerized ethylene oxide units of from 10 to 90% by weight, based on the weight of polymerized alkylene oxide units.

10. A liquid polyisocyanate mixture containing urethane groups as claimed in claim 8 or 12, wherein the polyether-polyol mixture (b) comprises, based on the total weight,
b1) 50% by weight of a polyoxypropylene glycol having a hydroxyl number of 56 and
b2) 50% by weight of a glycerol-initiated polyoxypropylene-polyoxyethylene-polyol having a hydroxyl number of 42 and having a content of polymerized ethylene oxide units of 70% by weight, based on the total weight of polymerized alkylene oxide units.

## Revendications

1. Procédé pour préparer des mousses souples de polyuréthanne et des mousses de PU élastiques formées in situ exemptes d'hydrocarbures fluorochlorés, par réaction
A) de mélanges de polyisocyanates, liquides et contenant des groupes uréthanne liés, à base de diisocyanate de diphénylméthane, avec
B) des polyesterpolyols, des polyétherpolyols, des polyacétals hydroxylés, des polycarbonates et/ou des polyesteramides ayant une masse moléculaire de 800 à 8200, et
C) éventuellement des prolongateurs de chaîne et/ou des agents de réticulation ayant une masse moléculaire de 18 à 400,
en présence
D) d'agents porogènes,
E) de catalyseurs,
et éventuellement
F) d'adjuvants et/ou additifs,
caractérisé en ce que les mélanges de polyisocyanates (A), liquides et contenant des groupes uréthanne liés, ont une teneur en groupes NCO de 20 à 30 % en poids par rapport au poids total, et sont obtenus
I) par réaction
a) d'un mélange (I) de diisocyanates de diphénylméthane et de polyisocyanates de polyphénylpolyméthylène ayant une teneur en diisocyanates de diphénylméthane isomères de 35 à 94 % en poids par rapport au poids total, avec
b) un mélange de polyétherpolyols (b) constitué
b₁) d'au moins un polyoxypropylèneglycol ayant un indice d'hydroxyle de 120 à 25, et
b₂) d'au moins un polyoxypropylène-polyoxyéthylène-polyol trifonctionnel, ayant un indice d'hydroxyle de 120 à 25 et une teneur en motifs oxyde d'éthylène polymérisés de 10 à 90 % en poids par rapport au poids des motifs oxyde d'alkylène polymérisés,
ou bien
II) par dilution
c) d'un quasi prépolymère contenant des groupes uréthanne, ayant une teneur en NCO de 10 à 19 % en poids, obtenu par réaction de diisocyanato-4,4'-diphénylméthane avec le mélange de polyétherpolyols (b), avec un mélange (I) de diisocyanates de diphénylméthane et de polyisocyanates de polyphénylpolyméthylène.

2. Procédé selon la revendication 1, caractérisé en ce que le mélange (I) de diisocyanates de diphénylméthane et de polyisocyanates de polyphénylpolyméthylène est, par rapport au poids total, constitué
Ia1) de 34 à 68 % en poids de diisocyanato-4,4'-diphénylméthane,
Ia2) de 1 à 25 % en poids de diisocyanato-2,4'-diphénylméthane,
Ia3) de 0 à 4 % en poids de diisocyanato-2,2'-diphénylméthane, et
Ia4) d'une quantité allant jusqu'à 65 % en poids de polyisocyanates de polyphénylpolyméthylène au moins trifonctionnels.

3. Procédé selon la revendication 1, caractérisé en ce que, pour préparer les mélanges de polyisocyanates (A) contenant des groupes uréthanne, on utilise un mélange de polyétherpolyols (b) qui, par rapport au poids total, est constitué
b1) de 80 à 20 % en poids d'au moins un polyoxypropylèneglycol ayant un indice d'hydroxyle de 120 à 25, et
b2) de 20 à 80 % en poids d'au moins un polyoxypropylène-polyoxyéthylène-polyol trifonctionnel ayant un indice d'hydroxyle de 120 à 25 et une teneur en motifs oxyde d'éthylène polymérisé de 10 à 90 % en poids par rapport au poids total des motifs oxyde d'alkylène polymérisé.

4. Procédé selon la revendication 1, caractérisé en ce que, pour préparer le mélange de polyisocyanates (A) contenant des groupes uréthanne, on utilise un mélange de polyétherpolyols (b) qui, par rapport au poids total, est constitué
b1) de 50 % en poids d'un polyoxypropylèneglycol ayant un indice d'hydroxyle de 56, et
b2) de 50 % en poids d'un polyoxypropyléne-polyoxyéthylène-polyol amorcé par le glycérol, ayant un indice d'hydroxyle de 42 et une teneur en motifs oxyde d'éthylène polymérisés de 70 % en poids par rapport au poids total des motifs oxyde d'alkylène polymérisés.

5. Procédé selon la revendication 1, caractérisé en ce qu'on utilise en tant que constituant (B) des polyétherpolyols ayant une fonctionnalité de 2 à 3 et une masse moléculaire de 800 à 8200 ou des mélanges ayant une fonctionnalité de 2 à 3 et une masse moléculaire de 800 à 8200, constitués de polyétherpolyols de ce type et de polyétherpolyols modifiés par un polymère, choisis dans le groupe comprenant les polyétherpolyols greffés ou les dispersions de polyétherpolyols, qui en tant que phase dispersée contiennent des polyurées, des polyhydrazides ou des polyuréthannes contenant des groupes amino tertiaire liés.

6. Procédé selon la revendication 1, caractérisé en ce qu'on utilise en tant qu'agent porogène (D) de l'eau ou des agents porogènes à action physique ou un mélange d'eau et d'un agent porogène à action physique, à la condition que l'on utilise en tant qu'agents porogènes à action physique des liquides qui sont inertes vis-à-vis des mélanges de polyisocyanates (A) liquides et modifiés par des groupes uréthanne, et qui présentent un point d'ébullition inférieur à 100°C, et que soient exclus les hydrocarbures fluorochlorés.

7. Mélanges de polyisocyanates liquides contenant des groupes uréthanne liés, à base de diisocyanates de diphénylméthane ayant une teneur en groupes NCO de 20 à 30 % en poids, que l'on obtient
I) par réaction
a) d'un mélange (I) de diisocyanates de diphénylméthane et de polyisocyanates de polyphénylpolyméthylène ayant une teneur en diisocyanates de diphénylméthane isomères de 35 à 94 % en poids par rapport au poids total, avec
b) un mélange de polyétherpolyols (b) constitué
b₁) d'au moins un polyoxypropylèneglycol ayant un indice d'hydroxyle de 120 à 25, et
b₂) d'au moins un polyoxypropylène-polyoxyéthylène-polyol trifonctionnel, ayant un indice d'hydroxyle de 120 à 25 et une teneur en motifs oxyde d'éthylène polymérisés de 10 à 90 % en poids par rapport au poids des motifs oxyde d'alkylène polymérisés,
ou
II) par dilution
c) d'un quasi-prépolymère contenant des groupes uréthanne, ayant une teneur en groupes NCO de 10 à 19 % en poids, obtenu par réaction de diisocyanato-4,4'-diphénylméthane avec le mélange de polyétherpolyols (b), avec
a) le mélange (I) ci-dessus de diisocyanates de diphénylméthane et de polyisocyanates de polyphénylpolyméthylène, ayant une teneur en diisocyanates de diphénylméthane isomères de 35 à 94 % en poids par rapport au poids total.

8. Mélanges de polyisocyanates, liquides et contenant des groupes uréthanne selon la revendication 7, caractérisés en ce que le mélange (I) de diisocyanates de diphénylméthane et de polyisocyanates de polyphénylpolyméthylène est, par rapport au poids total, constitué
Ia1) de 34 à 68 % en poids de diisocyanato-4,4'-diphénylméthane,
Ia2) de 1 à 25 % en poids de diisocyanato-2,4'-diphénylméthane,
Ia3) de 0 à 4 % en poids de diisocyanato-2,2'-diphénylméthane, et
Ia4) d'une quantité allant jusqu'à 65 % en poids de polyisocyanates de polyphénylpolyméthylène au moins trifoncntionnels.

9. Mélanges de polyisocyanates, liquides et contenant des groupes uréthanne selon les revendications 7 ou 8, caractérisés en ce que le mélange de polyétherpolyols (b) est constitué, par rapport au poids total,
b1) de 80 à 20 % en poids d'au moins un polyoxypropylèneglycol ayant un indice d'hydroxyle de 120 à 25, et
b2) de 20 à 80 % en poids d'au moins un polyoxypropylène-polyoxyéthylène-polyol trifonctionnel ayant un indice d'hydroxyle de 120 à 25 et une teneur en motifs oxyde d'éthylène polymérisés de 10 à 90 % en poids par rapport au poids total des motifs oxyde d'alkylène polymérisés.

10. Mélanges de polyisocyanates, liquides et contenant des groupes uréthanne selon les revendications 7 ou 8, caractérisé en ce que le mélange de polyétherpolyols (b) est constitué, par rapport au poids total,
b1) de 50 % en poids d'un polyoxypropylèneglycol ayant un indice d'hydroxyle de 56, et
b2) de 50 % en poids d'un polyoxypropylène-polyoxyéthylène-polyol amorcé au glycérol, ayant un indice d'hydroxyle de 42 et une teneur en motifs oxyde d'éthylène polymérisé de 70 % en poids par rapport au poids total des motifs oxyde d'alkylène polymérisé.
